# EUROPÄISCHE PATENTSCHRIFT

(11) **EP 3 274 300 B1**
(45) Veröffentlichungstag und Bekanntmachung des Hinweises auf die Patenterteilung: **12.12.2018**
(21) Anmeldenummer: 16712799.2
(22) Anmeldetag: 23.03.2016
(51) Int. Cl.: C02F 1/66, C02F 1/68, G05D 11/13, B01F 3/04

(54) **VERFAHREN UND VORRICHTUNG ZUM GEREGELTEN EINTRAGEN EINES GASES IN EIN FLUIDES MEDIUM**
METHOD AND DEVICE FOR THE REGULATED TRANSFER OF A GAS INTO A FLUID MEDIUM
PROCÉDÉ ET DISPOSITIF D'INJECTION RÉGULÉE D'UN GAZ DANS UN MILIEU FLUIDE

(30) Priorität: 24.03.2015 DE 102015003777
(43) Veröffentlichungstag der Anmeldung: 31.01.2018
(73) Patentinhaber: Messer Group GmbH, 65812 Bad Soden (DE)
(72) Erfinder: HERMANS, Monica, 41470 Neuss (DE); VERVALLE, Kurt, 2070 Zwijndrecht (BE)
(86) Internationale Anmeldenummer: PCT/EP2016/056333
(87) Internationale Veröffentlichungsnummer: WO 2016/150993

(56) Entgegenhaltungen:
- EP-A2- 1 050 709
- DE-A1-102008 032 369

## Beschreibung

Die Erfindung betrifft ein Verfahren zum geregelten Eintragen von Gas in ein fluides Medium, bei dem ein über eine Zuführleitung herangeführter Gasstrom an wenigstens einer Eintragsstelle in eine, einen Strom eines fluiden Mediums führende Mediumsleitung eingespeist wird. Die Erfindung betrifft des weiteren eine entsprechende Vorrichtung.

Verfahren und Vorrichtungen zum Eintragen von Kohlendioxid oder anderen Gasen in ein fluides Medium sind seit langem bekannt und kommen beispielsweise zur pH-Regulierung von Trinkwasser oder bei der Neutralisierung alkalischer Abwässer zum Einsatz. Dabei wird das Gas im gasförmigen oder im überwiegend flüssigen Zustand in das fluide Medium eingebracht.

Beispielsweise wird zur Einspeisung von Kohlendioxidgas üblicherweise flüssiges Kohlendioxid aus einer Flasche oder einem Tank entnommen und elektrisch oder unter Nutzung vorhandener Wärmequellen verdampft. Gasförmiges CO₂ kann mittels einer üblichen Durchflussmengenregulierung sehr genau dosiert werden. Nachteilig ist jedoch, dass der Einbau von Verdampfern mit einem beträchtlichen Investitionsaufwand verbunden ist. Insbesondere bei Kunden, bei denen nur ein gelegentlicher, beispielsweise nur ein bis zwei Mal im Monat erfolgender Eintrag von Kohlendioxid mit großem Massenstrom in ein fluides Medium erforderlich ist, ist dieser Investitionsaufwand wirtschaftlich kaum darstellbar. DE102008032369 offenbart ein Verfahren zum Karbonisieren eines flüssigen Mediums, durch Einbringen von CO₂ Gas unter Druck in das flüssige Medium.

Andere Methoden nutzen die direkte Dosierung von flüssigem Kohlendioxid. Beispielsweise ist aus der DE 25 44 198 A1 eine Vorrichtung zum Neutralisieren alkalischer Abwässer bekannt, bei dem flüssiges Kohlendioxid über eine innerhalb der zu neutralisierenden Flüssigkeit angeordneten Injektionsdüse eingetragen wird, wo es sehr rasch in die dampfförmige Phase übergeht. In der EP 2 179 782 A1 wird ein System zum Eintragen von flüssigem Kohlendioxid in ein fluides Medium vorgeschlagen, bei dem unmittelbar am Eintragspunkt ein Rückschlagventil vorgesehen ist, das erst bei einem Druck oberhalb des Tripelpunkts von CO₂ die Zufuhr von Kohlendioxid in das Medium erlaubt und dadurch gewährleistet, dass keine Trockeneisbildung in der Zufuhrleitung und den Ventilen auftritt. Auch beim Eintragen von flüssigem Kohlendioxid kann über ein übliches Mengenregelventil die Menge an zuzuführendem Kohlendioxid geregelt werden. Dazu wird üblicherweise ein Qualitätsparameter, wie beispielsweise der pH-Wert vor oder nach der Dosierung, zur Steuerung herangezogen. EP1050709 offenbart ein Verfahren zur kontrollierten Abgabe von verflüssigtem Gas als Flüssigphase.

Problematisch sind derartige Systeme ohne Verdampfungsschritt, bei denen Kohlendioxid im flüssigen Zustand in ein fluides Medium eingetragen wird, jedoch insbesondere dann, wenn verhältnismäßig große Mengenströme an Kohlendioxid dosiert werden sollen, und die Versorgung aus wirtschaftlichen oder anderen Gründen mittels mit flüssigem Kohlendioxid befüllten Flaschen oder Flaschenbündeln erfolgt. Bei dieser sogenannten Bündelversorgung nimmt der Druck im Flaschenbündel oder der Flasche während der schnellen Entnahme von Kohlendioxid signifikant ab, sodass es bereits in der Zuführleitung zum Eintragspunkt zur Bildung von Blasen aus gasförmigem Kohlendioxid kommt, die eine genaue Bestimmung der durchfließenden Kohlendioxidmenge erschweren und die, bei unveränderter Ventilstellung, die pro Zeiteinheit zugeführte Kohlendioxidmenge verringern. Oft stehen zudem keine Qualitätsparameter zur Steuerung zur Verfügung, wenn zum Beispiel eine mengenproportionale Dosierung des einzutragenden Gases erfolgen soll.

Es wurde daher versucht, durch eine externe Druckhaltung mittels eines gasförmigen Druckmediums den Druck im Bündel auf einen konstanten Wert zu halten. Diese Vorgehensweise ist jedoch gleichfalls mit einem beträchtlichen apparativem Aufwand verknüpft und darüber hinaus bei Bündeln aus Sicherheitsgründen nicht unproblematisch.

Eine wieder andere Methode wird in der EP 2 368 845 A1 vorgeschlagen: Dort wird die dielektrische Funktion eines durch eine Zuführleitung geführten Kohlendioxidstroms kontinuierlich gemessen, um aus der dielektrischen Funktion auf die Anteile von flüssiger und gasförmiger Phase zu schließen. Jedoch setzt diese Anordnung eine aufwändige zusätzliche Messtechnik voraus.

Der Erfindung liegt daher die Aufgabe zu Grunde, beim Eintragen eines Gases, insbesondere von Kohlendioxid, in ein fluides Medium eine effiziente Mengenregulierung des zugeführten Gases ohne großen apparativen Aufwand sicherzustellen, die insbesondere auch bei einer Bündelversorgung einsetzbar ist.

Gelöst ist diese Aufgabe durch ein Verfahren mit den Merkmalen des Patentanspruchs 1, sowie durch eine Vorrichtung mit den Merkmalen des Patentanspruchs 7. Vorteilhafte Ausgestaltungen der Erfindung sind in den Unteransprüchen angegeben.

Gemäß der Erfindung wird also in der Mediumsleitung im Bereich oder stromab zu einer Eintragsstelle oder zu mehreren Eintragsstellen des Gases ein Druckverlust laufend gemessen und als Regelparameter zur Steuerung eines in der Zuführleitung angeordneten Regelventils eingesetzt. Die Erfindung geht dabei von der Überlegung aus, dass nach dem Eintragen des Gasstroms in das fluide Medium stromab zur Eintragsstelle des Gases ein Gemisch aus fluidem Medium und Gas vorliegt. Je höher der Volumenanteil des Gases in diesem Gemisch ist, desto größer ist ein in der Mediumsleitung im Bereich der Eintragsstelle oder stromab dazu gemessener Druckverlust.

Beim eingetragenen Gasstrom handelt es sich um ein in das fluide Medium eingetragenes Gas (in Gasform) oder um ein verflüssigtes Gas, das vor oder während der Einspeisung in das fluide Medium verdampft. Die Erfindung eignet sich besonders für Fälle, in denen das Gas, beispielsweise Kohlendioxid, im verflüssigten Zustand herangeführt, jedoch noch in der Zuführleitung zumindest teilweise verdampft. Eine Veränderung des Anteils der Gasphase in der Zuführleitung führt zu einer Veränderung des insgesamt zugeführten Gasmassenstroms, also der Menge an pro Zeiteinheit dem fluiden Medium zugeführtem Gas, und damit zu einem veränderten Volumen-Anteil des im Gemisch mit dem fluiden Medium in der Mediumsleitung vorliegenden Gases, der sich wiederum in einer Änderung des gemessenen Druckverlustes äußert. Dieser Effekt wird erfindungsgemäß dazu genutzt, die am in der Zuführleitung montierten Regelventil einstellbare Zufuhr an Gas in die Mediumsleitung zu regeln.

Eine besonders vorteilhafte Ausgestaltung der Erfindung sieht vor, dass es sich bei dem der Mediumsleitung zugeführten Gasstrom um ein zumindest teilweise und/oder zeitweise in verflüssigter Form vorliegendes Gas handelt. Insbesondere können die Anteile von flüssiger und gasförmiger Phase während des Einspeisevorgangs variieren, wobei der Anteil der flüssigen Phase zwischen 0 und 100% schwanken kann. Die flüssige Phase verdampft beim Kontakt mit dem fluiden Medium rasch. Je größer dabei der gasförmige Anteil gegenüber dem flüssigen Anteil im Gasstrom in der Zuführleitung ist, desto geringer ist der insgesamt dem fluiden Medium zugeführte Gasmassenstrom und desto geringer ist der stromab zur Eintragsstelle gemessene Druckverlust in der Mediumsleitung. In diesem Fall wird beispielsweise das Regelventil in der Zuführleitung weiter geöffnet, um den zugeführten Gasmassenstrom wieder auf einen vorgegebenen Wert zu bringen.

Voraussetzungen für das erfindungsgemäße Verfahren ist lediglich ein definierter Volumenstrom des fluiden Mediums, der jedoch in vielen Fällen problemlos bereitgestellt werden kann. Nach einer Kalibrierung des Systems kann die insgesamt dem fluiden Medium zugeführte Menge an Gas sehr genau bestimmt werden, ohne dass die Phasenzusammensetzung des verflüssigten Gases in der Zuführleitung genau bekannt sein muss.

Zweckmäßigerweise wird das erfindungsgemäße Verfahren in Fällen eingesetzt, in denen mehrere - gleiche oder unterschiedliche - Gas-Ströme (flüssig und/oder gasförmig) in die Mediumsleitung eindosiert werden. In diesem Falle ermöglicht das erfindungsgemäße Verfahren, die insgesamt zudosierte Gasmenge zu regeln (beispielsweise konstant zu halten) ohne dass dazu eine Messung der einzelnen Gas-Massenströme erfolgen muss.

Das erfindungsgemäße Verfahren kann beispielsweise in Fällen genutzt werden, in denen ein Gas in einem Prozess teilweise verbraucht, teilweise jedoch zurückgeführt und wiederverwendet wird. In diesen Fällen kann mittels des erfindungsgemäßen Verfahrens sehr einfach die Dosierung von frischem Gas aus dem Vorratsbehälter zur Ergänzung der für den Prozess erforderlichen Gasmenge geregelt werden.

Bevorzugt erfolgt die Messung des Druckverlustes durch eine an sich bekannte und bewährte Differenzdruckmessung. Dabei wird der Druck in der Mediumsleitung stromauf und stromab zu einem in der Mediumsleitung - im Bereich der Eintragsstelle oder stromab dazu - angeordneten Strömungshindernis laufend gemessen und hieraus ein Wert für einen Differenzdruck bestimmt, der anschließend als Regelparameter zur Steuerung des Regelventils in der Zuführleitung eingesetzt wird. Alternativ erfolgen die Druckmessungen zur Bestimmung des Differenzdrucks stromauf und stromab sowohl zur Eintragsstelle als auch dem Strömungshindernis.

Das erfindungsgemäße Verfahren eignet sich insbesondere für die Zuführung von Kohlendioxid (im flüssigen und/oder gasförmigem Zustand) in ein fluides Medium, insbesondere für die Zuführung von Kohlendioxid in Trink- oder Abwasser, ist jedoch nicht hierauf beschränkt.

Bei einer erfindungsgemäßen Vorrichtung zum geregelten Eintragen eines Gases in ein fluides Medium wird das Gas gasförmig oder in zumindest teilweise und/oder zeitweise verflüssigter Form an einer Eintragsstelle in eine das fluide Medium führende Mediumsleitung eingetragen, wobei in der Mediumsleitung, im Bereich der Eintragsstelle oder stromab dazu, ein Strömungshindernis angeordnet ist. Stromauf und stromab zum Strömungshindernis, bevorzugt stromauf und stromab zur Eintragsstelle und dem Strömungshindernis, ist jeweils eine Druckerfassungseinrichtung in der Mediumsleitung angeordnet, die mit dem Regelventil in der Zuführleitung in Datenverbindung stehen.

Erfindungsgemäß wird kontinuierlich die Differenz zwischen den an den Druckerfassungseinrichtungen gemessenen Drücken ermittelt. Dieser Differenzdruck ist abhängig von der Zusammensetzung des Mediums, das die Messstelle durchläuft, und insbesondere abhängig von dem in das fluide Medium eingebrachten Gasstrom. Die Druckerfassungseinrichtungen sind beispielsweise als Druckmessumformer (PT oder PIT) ausgebildet, mittels denen der erfasste Druck unmittelbar in ein elektronisches Signal umgewandelt wird, und stehen mit einer Steuereinheit in Datenverbindung. Diese vergleicht den ermittelten Wert des Differenzdrucks mit einem Sollwert und sendet, abhängig von der Abweichung, an das Regelventil einen Steuerbefehl zur Änderung des Volumendurchflusses in der Zuleitung für das verflüssigte Gas. Auf diese Weise kann der dem fluiden Medium insgesamt zugeführte Gasmengenstrom auch bei variierenden Anteilen von gasförmiger oder flüssiger Phase im zugeführten Gasstrom zuverlässig geregelt werden.

Bevorzugt ist als Strömungshindernis eine Messblende oder ein statischer Mischer vorgesehen. Im letzteren Fall sorgt der statische Mischer zugleich für eine gleichmäßige Einmischung des verflüssigten Gases in das fluide Medium.

In einer besonders vorteilhaften Ausgestaltung der Erfindung ist in der Zuführleitung, im Bereich der Eintragsstelle, eine Rückströmsicherung in Gestalt eines Druckregel- oder Druckhalteventils angeordnet, das es ermöglicht, die Zudosierung des Gasstroms erst bei einem vorgegebenen Mindestdruck in der Zuführleitung oder bei einem Mindest-Überdruck in der Zuführleitung gegenüber dem Druck in der Mediumsleitung zu gestatten. Insbesondere kann auf diese Weise verhindert werden, dass im Falle eines Druckabfalls in der Zuführleitung fluides Medium aus der Mediumsleitung in die Zuführleitung eindringt. Ein Beispiel für eine derartige Rückströmsicherung, die zum Eindosieren eines kryogenen Mediums zum Einsatz kommt und insbesondere die Vereisung der Zuführleitung durch eindringendes fluides Medium oder durch gefrierendes Gas, im Falle von Kohlendioxid Trockeneis, verhindern soll, ist beispielsweise aus der EP 1 867 902 A2 bekannt, auf die hier ausdrücklich Bezug genommen wird.

Die erfindungsgemäße Vorrichtung ist insbesondere auch dann geeignet, wenn als Quelle für das verflüssigte Gas eine Gasflasche, ein aus einer Mehrzahl von Gasflaschen zusammengesetztes Flaschenbündel, mehreren Flaschenbündeln oder ein Tank für verflüssigtes Gas zum Einsatz kommt. Im Falle von Kohlendioxid eignet sich insbesondere eine CO₂-Steigrohrflasche oder ein oder mehrere zur Flüssigentnahme geeignete CO₂-Flaschenbündel oder ein CO₂-Flüssigtank.

Zweckmäßigerweise stehen die Druckerfassungseinrichtungen in der Mediumsleitung und das Regelventil mit einer elektronischen Steuereinheit in Datenverbindung, mittels der der Zustrom an verflüssigtem Gas nach einem vorgegebenen Programm oder in Abhängigkeit von einem vorgegebenem Sollwert steuer- und regelbar ist. Die Steuereinheit regelt insbesondere den Mengenstrom des Gases, das in die Mediumsleitung eingespeist wird, in Abhängigkeit vor einem mittels der Druckerfassungseinrichtungen festgestellten Differenzdruck. Die Steuereinheit überwacht oder regelt bevorzugt auch den Volumenstrom des fluiden Mediums; sie kann im Übrigen auch Teil eines kundenseitigen Überwachungssystems (zum Beispiel Regler oder Prozessleitsystem) sein und/oder für weitere kundenspezifische Aufgaben eingesetzt werden. Die Steuereinheit kann beispielsweise auch so programmiert sein, dass die dem Regelventil nach Erreichen einer vorgegebenen Gesamtmenge an zugeführten Gas und/oder beim Auftreten einer Störung, beispielsweise bei einer Verstopfung der Zuführleitung durch Gasbläschen, ein Signal zur vollständigen Sperrung oder Öffnung der Zufuhr an verflüssigtem Gas abgibt oder aber eine Sicherheitsstellung einnimmt.

Der erfindungsgemäße Verfahren bzw. die erfindungsgemäße Vorrichtung ist grundsätzlich immer dann einsetzbar, wenn eine mengenproportionale Dosierung des zugeführten Gases ohne exakte Messung der Gasmenge gewünscht wird und ein auftretender Druckverlust im fluiden Medium wirtschaftlich akzeptabel ist. Beispielsweise eignet sich das erfindungsgemäße Verfahren bzw. die erfindungsgemäße Vorrichtung zur Behandlung von Wasser als fluidem Medium, zum Beispiel für die Zubereitung von Prozesswasser mit hohem CO₂-Gehalt. Das erfindungsgemäße Verfahren bzw. die erfindungsgemäße Vorrichtung ist jedoch keineswegs auf die Zuführung von Kohlendioxid oder auf die Zuführung eines Gases in Wasser oder ein wässeriges fluides Medium beschränkt, sondern kann grundsätzlich für die Dosierung eines beliebigen Gases in ein beliebiges, gasförmiges oder flüssiges Medium eingesetzt werden. Durch die Erfindung werden insbesondere Probleme bei der Erfassung der zugeführten Gasmenge, die durch die Entstehung von Gasblasen bei der Zuführung eines verflüssigten Gases verursacht werden, zuverlässig vermieden.

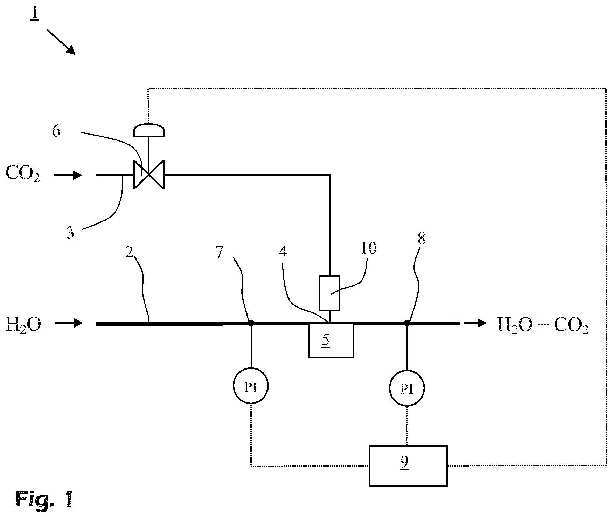

Anhand der Zeichnung soll ein Ausführungsbeispiel der Erfindung näher erläutert werden. Die einzige Zeichnung (Fig. 1) zeigt das Fließschema einer erfindungsgemäßen Vorrichtung.

Fig. 1 zeigt eine Vorrichtung 1 zum Eindosieren von gasförmigem oder verflüssigtem Gas, im Ausführungsbeispiel flüssiges Kohlendioxid, in ein fluides Medium. Das zu behandelnde fluide Medium, bei dem es sich insbesondere um Wasser, beispielsweise Prozesswasser, handelt, strömt durch eine Mediumsleitung 2. Zum Zuführen von flüssigem Kohlendioxid dient eine Zuführleitung 3, die an einer Eintragsstelle 4 in die Mediumsleitung 2 einmündet. An der Eintragsstelle 4 oder stromab dazu ist ein Strömungshindernis, im Ausführungsbeispiel ein statischer Mischer 5, angeordnet. Der Zustrom an Kohlendioxid durch die Zuführleitung 3 ist mittels eines ansteuerbaren Regelventils 6 einstellbar. In der Mediumsleitung 2 sind jeweils stromauf und stromab zur Eintragsstelle 4 und dem statischen Mischer 5 Druckmessgeräte 7, 8 angeordnet, bei denen es sich beispielsweise um PT- oder PIT- Geräte handelt. Die Druckmessgeräte 7, 8 und das Regelventil 6 stehen mit einer Steuereinheit 9 in Datenverbindung.

Beim Einsatz der Vorrichtung 1 wird Kohlendioxid aus einer hier nicht gezeigten Quelle, beispielsweise aus einem CO₂-Flaschenbündel, über die Zuführleitung 3 herangeführt und mittels des statischen Mischers 5 dem fluiden Medium in der Mediumsleitung 2 beigemischt. Durch die Wärme des umgebenden fluiden Mediums verdampft das flüssige Kohlendioxid fast augenblicklich, und es entsteht stromab zur Eintragsstelle 4 ein Gemisch aus fluidem Medium und gasförmigem Kohlendioxid. In der Mediumsleitung 2 wird kontinuierlich der Druck oberhalb und unterhalb von Eintragsstelle 4 und statischem Mischer 5 gemessen und hieraus in der Steuereinheit 9 ein Differenzdruck bestimmt. Die Höhe des Differenzdrucks hängt dabei insbesondere von dem Anteil an gasförmigem Kohlendioxid im fluiden Medium stromab zur Eintragsstelle 4 ab. Eine optionale Rückströmsicherung 10 in der Zuführleitung 3 im Bereich der Eintragsstelle 4 verhindert im Falle eines Druckabfalls in der Zuführleitung 3 das Einströmen von fluidem Medium in die Zuführleitung 3.

Bei der Zuführung des flüssigen Kohlendioxids kann es bereits innerhalb der Zuführleitung 3 zur Teilverdampfung des Kohlendioxids kommen. Insbesondere beim Einsatz von vollen CO₂-Flaschenbündeln als Kohlendioxidquelle kommt es bei großer Entnahme-Rate zum verstärkten Auftreten von Gasblasen. Die Gasblasen beeinflussen den durch die Zuführleitung 3 hindurchgeführten Kohlendioxidstrom derart, dass die Gesamtmenge des der Mediumsleitung 2 pro Zeiteinheit zugeführten Kohlendioxids sinkt, je größer der Gasanteil in der Zuführleitung 3 ist. Damit verändert sich zugleich der Differenzdruck zwischen den Druckmessgeräten 7 und 8. Die Steuereinheit 9 registriert diese Änderung und sendet an das Regelventil 6 ein Steuersignal zur Anpassung des Kohlendioxidstroms in der Zuführleitung 3.

Um eine exakte Dosierung des Kohlendioxids zu ermöglichen, muss die Vorrichtung 1 vor ihrem Regeleinsatz kalibriert werden. Hierzu werden bekannte gasförmige Kohlendioxidströme durch die Zuführleitung 3 in das fluide Medium (bei einem gleichfalls bekannten Wert des durch die Mediumsleitung 2 hindurchgeführten Mediumsstroms) eingespeist und die sich dabei zwischen den Druckmessgeräten 7 und 8 ergebende Druckdifferenzen zur Erstellung einer Kalibrierkurve aufgenommen. Anschließend kann die Menge des in die Mediumsleitung 2 eingespeisten Kohlendioxids genau bestimmt werden, ohne dass es hierfür einer direkten Messung der durch die Zuführung 3 strömenden Kohlendioxidmenge bedarf. Alternativ kann auch eine für das jeweilige Strömungshindernis berechnete Kalibrierkurve zum Einsatz kommen.

Im Übrigen ist darauf zu achten, dass die Zuführleitung 3 stromauf zum Regelventil 6 nicht durch ein massives Ansammeln von Gasbläschen verstopft werden kann. Daher sind Engstellen und nach unten führende oder abschüssige Leitungsstücke nach Möglichkeit zu vermeiden. Weiterhin kann anstelle oder ergänzend zum statischen Mischer 5 ein anderes Strömungshindernis vorgesehen sein, an dem die Druckdifferenz gemessen wird, beispielsweise eine Messblende. Das Strömungshindernis kann auch stromab zur Eintragsstelle 4 angeordnet sein. Ferner kann anstelle der Gasversorgung aus einer Flasche oder einem Flaschenbündel auch eine Tankversorgung zum Einsatz kommen.

### Bezugszeichenliste

- 1.: Vorrichtung
- 2.: Mediumsleitung
- 3.: Zuführleitung
- 4.: Eintragstelle
- 5.: Statischer Mischer
- 6.: Regelventil
- 7.: Druckmessgerät
- 8.: Druckmessgerät
- 9.: Steuereinheit
- 10.: Rückströmsicherung

## Patentansprüche

1. Verfahren zum geregelten Eintragen eines Gases in ein fluides Medium, bei dem ein über eine Zuführleitung (3) herangeführter Gasstrom an wenigstens einer Eintragsstelle (4) in eine einen Strom eines fluiden Mediums führende Mediumsleitung (2) eingespeist wird,
**dadurch gekennzeichnet,**
**dass** in der Mediumsleitung (2) im Bereich der Eintragstelle (4) oder stromab zur Eintragsstelle (4) oder zu den Eintragsstellen ein Druckverlust laufend gemessen und als Regelparameter zur Steuerung eines in der Zuführleitung (3) angeordneten Regelventils (6) eingesetzt wird.

2. Verfahren nach Anspruch 1, **dadurch gekennzeichnet, dass** der der Mediumsleitung (2) zugeführte Gasstrom zumindest teilweise und/oder zeitweise aus verflüssigtem Gas besteht, das beim Eintritt in das fluide Medium in die Mediumsleitung (2) verdampft.

3. Verfahren nach Anspruch 1 oder 2, **dadurch gekennzeichnet, dass** ein Gasstrom oder mehrere Gasströme an mehreren Eintragsstellen (4) in die Mediumsleitung (2) eingespeist wird und in Abhängigkeit von der Messung eines Druckverlustes stromab zu den Eintragsstellen (4) die Gesamtmenge des eingetragenen Gases geregelt wird.

4. Verfahren nach einem der vorhergehenden Ansprüche, **dadurch gekennzeichnet, dass** zur Messung des Druckverlustes jeweils stromauf und stromab zu einem in der Mediumsleitung (2) angeordneten Strömungshindernis (5) der Druck in der Mediumsleitung (2) laufend gemessen und hieraus ein Wert für einen Differenzdruck bestimmt wird, der als Regelparameter zur Steuerung des Regelventils (6) eingesetzt wird.

5. Verfahren nach Anspruch 4, **dadurch gekennzeichnet, dass** der Druck in der Mediumsleitung stromauf und stromab zur Eintragsstelle (4) gemessen wird.

6. Verfahren nach einem der vorhergehenden Ansprüche, **dadurch gekennzeichnet, dass** der Gasstrom aus Kohlendioxid besteht.

7. Vorrichtung zum geregelten Eintragen eines Gases in ein fluides Medium, mit einer an eine Quelle für ein Gas angeschlossenen und mit einem ansteuerbaren Regelventil (6) ausgerüsteten Zuführleitung (3) für den Gasstrom, die an wenigstens einer Eintragsstelle (4) in eine ein fluides Medium führende Mediumsleitung (2) einmündet,
**dadurch gekennzeichnet,**
**dass** in der Mediumsleitung (2) ein Strömungshindernis (5) angeordnet ist und stromauf und stromab zum Strömungshindernis (5), oder zu Eintragsstelle (4) und Strömungshindernis (5), jeweils eine Druckerfassungseinrichtung (7, 8) zur Erfassung des Drucks in der Mediumsleitung (2) angeordnet ist, die mit dem Regelventil (6) in der Zuführleitung (3) in Datenverbindung steht, so dass ein Druckverlust laufend gemessen und als Regelparameter zur Steuerung eines in der Zuführleitung angeordneten Regelventils eingesetzt werden kann.

8. Vorrichtung nach Anspruch 7, **dadurch gekennzeichnet, dass** als Strömungshindernis (5) ein statischer Mischer oder eine Messblende vorgesehen ist.

9. Vorrichtung nach einem der Ansprüche 7 oder 8, **dadurch gekennzeichnet, dass** in der Zuführleitung (3), im Bereich der Eintragsstelle (4), eine Rückströmsicherung (10) angeordnet ist.

10. Vorrichtung nach einem der Ansprüche 7 bis 9, **dadurch gekennzeichnet, dass** als Quelle für das verflüssigte Gas eine Gasflasche, ein Flaschenbündel, mehrere Flaschenbündel oder ein Tank zum Einsatz kommt.

11. Vorrichtung nach einem der Ansprüche 7 bis 10, **dadurch gekennzeichnet, dass** die Druckerfassungseinrichtungen (7, 8) und das Regelventil (6) mit einer Steuereinheit (9) in Datenverbindung stehen, mittels der der Zustrom an verflüssigtem Gas durch die Zuführleitung (3) nach einem vorgegebenen Programm regelbar ist.

## Claims

1. Method for the regulated transfer of a gas into a fluid medium, in which a gas stream, which is introduced via a supply line (3), is fed through at least one point of entry (4) into a medium line (2) that conducts a stream of a fluid medium,
**characterized in that**
a pressure drop in the medium line (2) is continuously measured in the vicinity of the point of entry (4) or downstream of the point or points of entry (4), and it is used as a control parameter for controlling a control valve (6) that is arranged in the supply line (3).

2. Method according to Claim 1, **characterized in that** the gas stream supplied to the medium line (2) consists at least partially and/or temporarily of liquefied gas, which vaporizes upon entry into the fluid medium in the medium line (2).

3. Method according to Claim 1 or 2, **characterized in that** a gas stream or multiple gas streams are fed into the medium line (2) at multiple points of entry (4), and the total amount of gas that is introduced is regulated as a function of the measurement of a pressure drop downstream of the points of entry (4).

4. Method according to one of the preceding claims, **characterized in that**, in order to measure the pressure drop both upstream and downstream of a flow obstacle (5) arranged in the medium line (2), the pressure in the medium line (2) is measured continuously, and a value for a differential pressure is determined from this, which is then used as a control parameter for controlling the control valve (6).

5. Method according to Claim 4, **characterized in that** the pressure in the medium line is measured upstream and downstream of the point of entry (4).

6. Method according to one of the preceding claims, **characterized in that** the gas stream consists of carbon dioxide.

7. Device for the regulated transfer of a gas into a fluid medium, having a supply line (3) for the gas stream, which is connected to a gas source and equipped with a controllable control valve (6) and which discharges through at least one point of entry (4) into a medium line (2) that conducts a fluid medium,
**characterized in that**
a flow obstacle (5) is arranged in the medium line (2), and one pressure detection device each (7, 8) is arranged upstream and downstream of said flow obstacle (5) or of the point of entry (4) and the flow obstacle (5) in order to detect the pressure in the medium line (2), wherein the pressure detection device is in data communication with the control valve (6) in the supply line (3), such that a pressure loss can be continuously measured and used as the control parameter for controlling a control value arranged in the supply line.

8. Device according to Claim 7, **characterized in that** a static mixer or a measuring orifice is provided as the flow obstacle (5).

9. Device according to Claim 7 or 8, **characterized in that** a check valve (10) is arranged in the supply line (3), in the vicinity of the point of entry (4).

10. Device according to one of Claims 7 to 9, **characterized in that** a gas cylinder, a cylinder bundle, a plurality of cylinder bundles or a tank is used as the source for the liquefied gas.

11. Device according to one of Claims 7 to 10, **characterized in that** the pressure detection devices (7, 8) and the control valve (6) are in data communication with a control unit (9), by means of which the inflow of liquefied gas through the supply line (3) can be regulated in accordance with a predetermined program.

## Revendications

1. Procédé pour l'injection régulée d'un gaz dans un milieu fluide, dans lequel on introduit un courant de gaz amené par une conduite d'alimentation (3) en au moins un point d'injection (4) dans une conduite de milieu (2) transportant un courant d'un milieu fluide, **caractérisé en ce que** l'on mesure en continu une perte de pression dans la conduite de milieu (2) dans la région du point d'injection (4) ou en aval du point d'injection (4) ou des points d'injection et on l'utilise comme paramètre de régulation pour commander une soupape de régulation (6) installée dans la conduite d'alimentation (3).

2. Procédé selon la revendication 1, **caractérisé en ce que** le courant de gaz fourni à la conduite de milieu (2) se compose au moins en partie et/ou temporairement de gaz liquéfié, qui se vaporise lors de l'entrée dans le milieu fluide dans la conduite de milieu (2).

3. Procédé selon la revendication 1 ou 2, **caractérisé en ce que** l'on introduit un courant de gaz ou plusieurs courants de gaz en plusieurs points d'injection (4) dans la conduite de milieu (2) et on régule la quantité totale du gaz introduit en fonction de la mesure d'une perte de pression en aval des points d'injection (4).

4. Procédé selon l'une quelconque des revendications précédentes, **caractérisé en ce que** pour la mesure de la perte de pression on mesure en continu la pression dans la conduite de milieu (2) respectivement en amont et en aval d'un obstacle à l'écoulement (5) disposé dans la conduite de milieu (2) et on détermine à partir de celle-ci une valeur d'une pression différentielle, que l'on utilise comme paramètre de régulation pour la commande de la soupape de régulation (6).

5. Procédé selon la revendication 4, **caractérisé en ce que** l'on mesure la pression dans la conduite de milieu en amont et en aval du point d'injection (4).

6. Procédé selon l'une quelconque des revendications précédentes, **caractérisé en ce que** le courant de gaz se compose de dioxyde de carbone.

7. Dispositif pour l'injection régulée d'un gaz dans un milieu fluide, avec une conduite d'alimentation (3) pour le courant de gaz raccordée à une source de gaz et équipée d'une soupape de régulation pouvant être commandée (6), qui débouche en au moins un point d'injection (4) dans une conduite de milieu (2) transportant un milieu fluide, **caractérisé en ce qu'**un obstacle à l'écoulement (5) est disposé dans la conduite de milieu (2) et un dispositif de détection de pression (7, 8) est disposé respectivement en amont et en aval de l'obstacle à l'écoulement (5) ou du point d'injection (4) et de l'obstacle à l'écoulement (5) pour la détection de la pression dans la conduite de milieu (2), et est en liaison de transmission de données avec la soupape de régulation (6) dans la conduite d'alimentation (3), de telle manière qu'une perte de pression puisse être mesurée en continu et utilisée comme paramètre de régulation pour la commande d'une soupape de régulation installée dans la conduite d'alimentation.

8. Dispositif selon la revendication 7, **caractérisé en ce qu'**il est prévu un mélangeur statique ou un diaphragme de mesure comme obstacle à l'écoulement (5).

9. Dispositif selon une des revendications 7 ou 8, **caractérisé en ce qu'**une protection contre le reflux (10) est disposée dans la conduite d'alimentation (3), dans la région du point d'injection (4).

10. Dispositif selon l'une quelconque des revendications 7 à 9, **caractérisé en ce que** l'on utilise une bouteille de gaz, un faisceau de bouteilles de gaz, plusieurs faisceaux de bouteilles de gaz ou une citerne comme source pour le gaz liquéfié.

11. Dispositif selon l'une quelconque des revendications 7 à 10, **caractérisé en ce que** les dispositifs de détection de pression (7, 8) et la soupape de régulation (6) sont en liaison de transmission de données avec une unité de commande (9), au moyen de laquelle l'alimentation en gaz liquéfié par la conduite d'alimentation (3) peut être régulée suivant un programme prédéterminé.
